Europäisches Patentamt

(19) European Patent Office

Office européen des brevets

(11) Publication number: **0 194 726**
**B1**

# EUROPEAN PATENT SPECIFICATION

(45) Date of publication of the patent specification:
29.03.89

(21) Application number: 86200376.1

(22) Date of filling: 10.03.86

(51) Int. Cl.⁴: **B 62 J 6/00**

(54) **Reflective spoked wheel and reflective attachment for a spoked wheel.**

(30) Priority: 11.03.85 NL 8500672

(43) Date of publication of application:
17.09.86 Bulletin 86/38

(45) Publication of the grant of the patent:
29.03.89 Bulletin 89/13

(84) Designated Contracting States:
BE DE FR GB NL

(56) References cited:
EP-A-0 094 700
DE-A-2 750 200
US-A-4 285 573

(73) Proprietor: **Van Schothorst B.V., P.O. Box 65, NL-3770 AB Barneveld (NL)**

(72) Inventor: **Pekelharing, Jules F.M., De Mahonie 6, NL-5831 RM Boxmeer (NL)**

(74) Representative: **Zuidema, Bert, Ir., p/a HOOGOVENS GROEP B.V. P.O. Box 10.000, NL-1970 CA IJmuiden (NL)**

EP 0 194 726 B1

## Description

The invention relates to a light-reflective spoked wheel for use for instance on bicycles. The invention relates to a reflective attachment for use on a spoked wheel. Although the invention is primarily intended for application to wheels of bicycles and motor-cycles, it is also applicable to other vehicles in which spoked wheels are used such as for instance carriages or cars for invalid persons etc.

Recently there has been increased interest in providing vehicles and other participants in traffic with a sufficient amount of reflective material in order that, upon illumination by light sources particularly from other vehicles, a sufficiently clear image of the vehicle is obtained by reflection so that the form of the illuminated object can be determined.

For bicycles it has been suggested to provide the side surfaces of the tires with reflective material, so that in traffic clearly illuminated circles become visible. A drawback of this is that it increases the price of the tires, and that of course it is effective only for the lifetime of the tire.

In US-4 285 573, which corresponds to the preamble of claim 2, a reflective spoked wheel is described having a rim and spokes which form two series respectively attached to the rim on opposite sides of the central radial plane of the rim. This spoked wheel incorporates a light reflective ring made from thin flexible material and having light reflective material on both sides thereof. Due to corrugation the ring is resistant to bending in the radial plane.

In this application resistance to bending means that the element keeps its shape when not being supported or stressed along its entire length.

Further, the corrugation is needed to produce alternate ridges and valleys of substantial depth therein so as to obtain sufficient securing of the ring between and by the two said series of spokes. The reliability of the attachment of the ring to the spokes thereby heavily depends on the dimensions of the valleys and ridges, which therefore have to be tightly controlled during manufacturing.

The object of the invention now, is to obtain a reflective element to which an easier way of manufacturing applies with not as many processing steps as with the known element, and which can be readily connected to the spoked wheel.

The reflective spoked wheel according to the invention is characterized in that the elongate element is flat and in that there are at least four securing elements at separate locations all around the wheel's circumference to fasten the elongate element to the supporting spokes or rim.

This using of separate supports has the advantage that the elongate element can easily be held in a stable manner around the wheel, and in the event of the elongate element needing to be replaced, this can be done easily also.

A plurality of the reflective elements may be provided each of which corresponds only to a sector of the wheel. However in order to obtain a stable or still reflective image, it is preferred to have only one reflective element per wheel, which extends substantially around the entire circumference of the wheel. This element may have various shapes in cross-section. For instance it may be adapted more or less to the angle between the two series of spokes, which results in good contact with the spokes. It is preferred however, that the reflective element has the shape of a flat strip, curved in a radial plane of the wheel and attached so as to lie radially inside the circle of the spoke nipples. In this way the spokes can be tightened even after attachment of the reflective element.

The dimensions of the flat strip may be selected in dependence upon the choice of the material for the reflective element and also upon fashion and other factors. For instance the strip may be made from steel, aluminium or a synthetic resin (plastics). In production it has been found that good results are obtained with a strip of cross sectional dimensions 10 x 1.5 mm.

The reflective material may be applied as one or more of reflective paints which are commercially available. Alternatively, reflective materials are commercially obtainable which are incorporated in a self adhesive plastics foil which may be attached to the element.

Good results are obtained with a construction in which the reflective element is attached to at least four supports which are fastened to the wheel rim. Best results have been obtained by using six, seven or eight such supports. By the selection of the radial length of these supports the reflective element may be fixed at a greater or a smaller distance from the wheel rim. This is important since there exist no standardised sizes for the commonly used locks which pass between the spokes of bicycle and motor-cycle wheels. By selecting the length of the supports it is possible to obtain a construction of the reflecting spoked wheel in which the lock and the reflecting element do not interfere.

If it is not possible or desirable to provide the wheel rim with extra holes, a method of attaching the supports to the wheel rim may be used, in which these supports are attached to two neighbouring spokes or a method may be used in which they are glued to the wheel rim. It is preferred according to the invention, however, that each said support has a stem with a head at its radially outer end and a resilient latch-like projection spaced from the head whereby the support is fastened to the rim by insertion of the stem through a radially directed hole in the rim so that the head and the latch-like projection are respectively on opposite radial sides of the rim. In this way a firm attachment can be obtained which provides as a further advantage that the spoke nipples can remain completely free and therefore that the spokes can be tightened after fitting of the attachment.

To attach the preferably strip-shaped reflective element, the supports may be provided with grooves having latch-like or barb shaped projections on at least one of the groove surfaces, by which the strip is retained in the groove. By pressing the groove open the strip can be detached again from the supports and be replaced by another strip if necessary.

The problem in connection with the presence of wheel locks may be prevented by using an alternative construction according to the invention in which supports fastened on the rim are not used and in which the element is attached to the spokes at a distance of between 5 and 8 cm and preferably 7.5 cm radially inwardly from the wheel rim. This construction of the reflective attachment may easily be assembled and mounted if there are a plurality of the elongate elements in the form of segments which at their ends are attached by means of securing devices e.g. bolts or clamps, to each other and/or to the spokes. The securing devices may comprise screws or bolts which extend through holes in the ends of the segments.

In another aspect, the invention provides reflective attachment for a spoked wheel, having reflective material on surfaces which in use face axially with respect to the wheel, characterised by an elongate element which is curved in one plane, which in use is a radial plane of the wheel, and is resistant to bending in said plane and at least one support for said element to which said element is attachable and which is securable to the wheel rim, said reflective material being on said elongate element.

In yet another aspect, the invention provides reflective attachment for a spoked wheel, having reflective material on surfaces which in use face axially with respect to the wheel, characterised by a plurality of elongate elements each of the form of a segment of a circle and each curving in a plane which in use is a radial plane of the wheel and being resistant to bending in that plane, the reflective material being on said elongate elements, there further being securing means for attaching the elements at the circumferential ends to each other and/or to the spokes of the wheel. There may be for instance four such segmental elements which are intended to be attached at a distance of between 5 and 8 cm from the wheel rim.

Two embodiments of the invention will be described below by way of example with reference to the drawing, in which:

Figure 1 shows a sector of a first reflective spoked wheel embodying the invention in side view,

Figure 2 is a cross section on the line II - II of Figure 1 on an enlarged scale,

Figure 3 shows another reflective spoke wheel embodying the invention, in which part of the wheel is shown in side, view and

Figures 4 and 5 show details from Figure 3, on lines IV - IV and V - V on an enlarged scale.

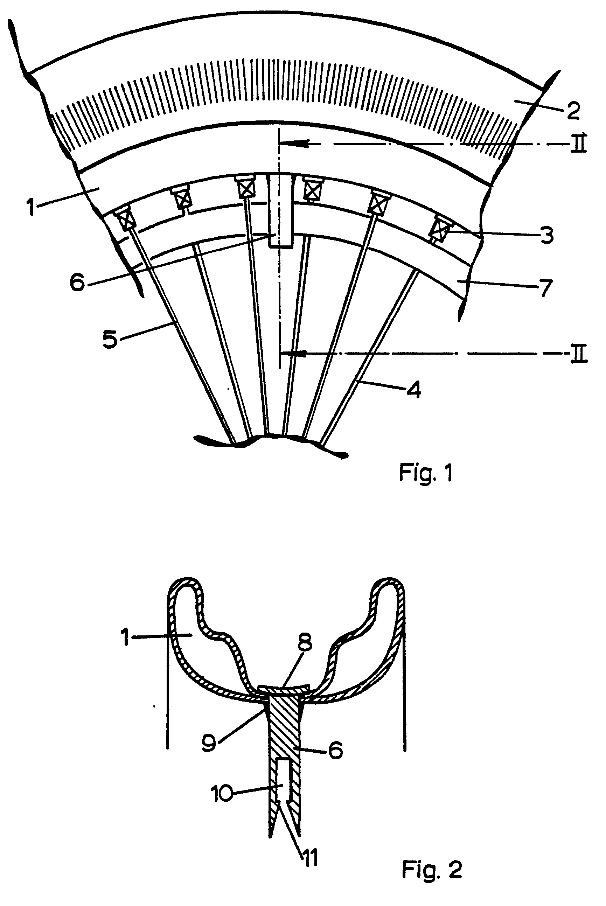

Figure 1 shows a wheel rim 1 of conventional construction, carrying a tire 2. In spoke-nipples 3 spokes of two series 4 and 5 fit, these series respectively being inclined forwardly and rearwardly from the plane of the drawing so as to be attached by the nipples at opposite sides of the central radial plane of the wheel. Uniformly spaced along the circumference of the wheel eight supports 6 are attached to the wheel rim 1. In the supports 6 a curved aluminium strip 7 is fastened, which in this embodiment has a thickness of 1.5 mm and a width of 10 mm, and a length so as to extend 360°. This strip resists bending in the radial plane but can be flexed sufficiently to allow it to be inserted between the spokes. On its side surfaces the strip 7 is covered by reflective material of a type which is commercially obtainable as a sticking tape. The strip 7 lies between the two series of spokes and radially within the circle formed by spoke nipples 3.

Figure 2 shows that the support 6 has a stem with a head 8 and a plurality of springy projections 9. The stem can be inserted through a bore in the rim 1 from the tire side and can be clipped securely in the wheel rim by the projections 9.

Each support 6 has a groove 10 open radially inwardly, the walls of which at the radially inner ends form latch-like barbs 11 or hooks which are springy. The strip 7 can be pressed into groove 10 and is then clipped and held behind the barbs 11. By opening groove 10 by means of a screwdriver or a similar tool the strip can be removed again if necessary.

The illustrated design can be varied in many ways. For instance the supports 6 can be made radially longer, so that the strip 7 is located more inwardly. If it is found disadvantageous to make bores in the rim for attaching the supports 6 it is alternatively possible to provide the supports 6 with clips which can be fastened detachably to neighbouring spoke nipples 3. Alternatively the projections 9 may be made much greater, thus allowing glueing of the supports 6 to the wheel rim.

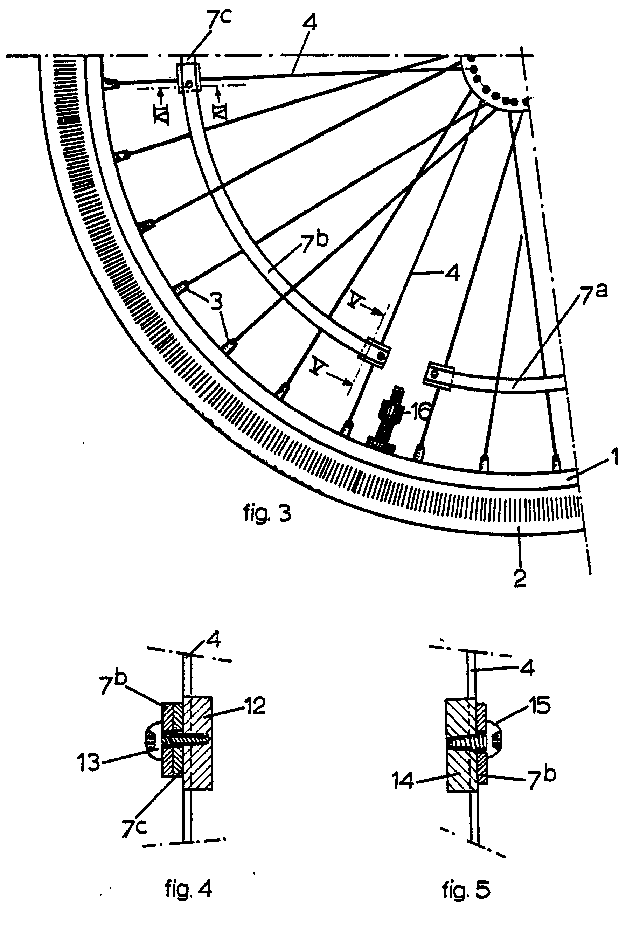

The embodiment of Figs. 3 to 5 has a reflective strip 7 which is attached to the spokes of the wheel, not to the rim as in the embodiment of Figs. 1 and 2. The strip 7 in this case is formed of a plurality of arcuate segments 7a, 7b, 7c etc. of metal strip, with adhesive reflective tape on their side surfaces. The segments, of which one 7b is fully shown, and two 7a and 7c are partly shown, are thus resistant to bending in the radial plane and from the strip 7 which is coaxial with the wheel.

Segments 7a and 7b are attached at one end in each case to a spoke only, whereas their other circumferential ends are attached to a spoke and to the next segment (7b to 7c as shown in Figure 3). The distance from the strip 7 to rim 1 is 7.5 cm. The free ends of the segments 7a and 7b leave between them a free space for access to the valve 16. The strip 7 otherwise extends all around the wheel.

Figure 4 shows that the overlaps of segments 7b and 7c are joined to one of the spokes 4 by means of a screw 13 which fits in a counterpart 12 member which is positioned at the other side of the spoke 4. The member 12 is made from a suitable synthetic resin such as a polyamide.

Similarly Figure 5 shows the attachment of the other end of segment 7b to a spoke 4 by means of a similar counterpart member 14 and screw 15.


## Claims

1. Reflective spoked wheel (1), for use for example on a bicycle, having a rim (1) and spokes (4) which form two series respectively attached to the rim on opposite sides of the central radial plane of the rim (1), and having reflective material applied to axially facing surfaces of at least one elongate element (7) supported by the spokes (4) or the rim (1) and which is resistant to bending in the radial plane and follows the curvature of the rim (1) between said two series of spokes (4), characterised in that the elongate element is flat and in that there are at least four securing elements (6, 12, 13, 14, 15) at separate locations all around the wheel's circumference to fasten the elongate element (7) to the supporting spokes (4) or rim (1).

2. Reflective spoked wheel, according to claim 1 wherein there is a single one of said elongate element(s) (7) in the form of a flat strip curving in the radial plane of the wheel (1) and attached so as to lie radially inwardly of the circle of the spoke nipples (3).

3. Reflective spoked wheel, according to claim 1 or 2 wherein there are six, seven of eight of said supports (6).

4. Reflective spoked wheel, according to any one of claims 1 to 3, wherein the supports (6) comprise a groove (10) and have a resilient latch-like projection (11) for each groove (10) to retain the element(s) (7) in the groove.

5. Reflective spoked wheel, according to any one of claims 1 to 4 wherein each said support (6) has a stem with a head (8) at its radially outer end and a resilient latch-like projection (9) spaced from the head (8), whereby the support (6) is fastened to the rim by insertion of the stem through a radially directed hole in the rim so that the head (8) and the latch-like projection (9) are respectively on opposite radial sides of the rim.

6. Reflective spoked wheel according to any one of claims 1 to 4 wherein the said element(s) (7) are attached to the spokes (4) of the wheel (1) so as to lie at a spacing of 5 to 8 cm, preferably 7,5 cm, from the rim.

7. Reflective spoked wheel according to claim 6 wherein there is a plurality of element(s) (7) in the form of segments of a circle which are attached to the spokes (4) by securing means, e.g. bolts (13, 15), which pass through holes in the said ends of the element(s) (7).

8. Reflective attachment suitable to be used with the reflective spoked wheel of any one of claims 1 to 7.


## Patentansprüche

1. Reflektierendes Speichenrad (1), zur Verwendung beispielsweise bei einem Fahrrad, mit einer Felge (1) und Speichen (4), welche zwei, jeweils an entgegengesetzten Seiten der radialen Mittelebene der Felge (1) an der Felge befestigte Serien bilden, und mit an den, in axialer Richtung weisenden Flächen von zumindest einem, von den Speichen (4) oder der Felge (1) getragenen, langgestreckten Elementen (7) angebrachten, reflektierendem Material, welches in der radialen Ebene biegesteif ist und der Krümmung der Felge (1) zwischen besagten beiden Serien an Speichen (4) folgt, dadurch gekennzeichnet, daß das langgestreckte Element flach ist und daß zumindest vier Befestigungselemente (6, 12, 13, 14, 15) an getrennten Stellen rund um den Radumfang zur Befestigung des langgestreckten Elementes (7) an den tragenden Speichen (4) oder an der Felge (1) vorgesehen sind.

2. Reflektierendes Speichenrad gemäß Anspruch 1, wobei eines der besagten langgestreckten Elemente (7) die Form eines flachen, in der Radialebene des Rades (1) gekrümmten Streifens hat und so angebracht ist, daß es radial innerhalb des Kreises der Speichennippel (3) liegt.

3. Reflektierendes Speichenrad gemäß Anspruch 1 oder 2, wobei sechs, sieben von acht der besagten Stützen (6) vorhanden sind.

4. Reflektierendes Speichenrad gemäß irgendeinem der Ansprüche 1 bis 3, wobei die Stützen (6) eine Nut (13) aufweisen und einen elastischen, klinkenähnlichen Vorsprung (11) für jede Nut (10) zum Festhalten der Elemente (7) in der Nut haben.

5. Reflektierendes Speichenrad gemäß irgendeinem der Ansprüche 1 bis 4, wobei jede besagte Stütze (6) einen Stiel mit einem Kopf (8) am radial äußeren Ende und einen elastischen, klinkenähnlichen Vorsprung (9) im Abstand vom Kopf (8) aufweist, wodurch die Stütze (6) an der Felge durch Einsetzen des Stieles durch ein radial gerichtetes Loch in der Felge befestigt wird, sodaß sich der Kopf (8) und der klinkenähnliche Vorsprung (9) jeweils auf entgegengesetzten radialen Seiten der Felge befinden.

6. Reflektierendes Speichenrad gemäß irgendeinem der Ansprüche 1 bis 4, wobei besagte(s) Element(e) (7) an den Speichen (4) des Rades (1) angebracht ist (sind), um im Abstand von 5 bis 8 cm, vorzugsweise 7,5 cm von der Felge zu liegen.

7. Reflektierendes Speichenrad gemäß Anspruch 6, wobei eine Vielzahl von Elementen (7) in Form eines Kreissegmentes vorgesehen ist, welche an den Speichen (4) durch Befestigungsmittel, z. B. Bolzen (13, 15) angebracht sind, welche durch Löcher in den besagten Enden der Elemente (7) hindurchgehen.

8. Reflektierende Anbringung geeignet für die Verwendung mit dem reflektierenden Speichenrad irgend eines der Ansprüche 1 bis 7.

**Revendications**

1. Roue réflectrice (1) à rayons, destinée à être utilisée, par exemple sur une bicyclette, cette roue comportant une jante (1) et des rayons (4), qui forment deux séries fixées respectivement à la jante, de part et d'autre du plan radial central de cette jante (1), ainsi qu'une matière réflectrice appliquée aux surfaces orientées axialement d'au moins un élément (7) de forme allongée, qui est supporté par les rayons (4) ou la jante (1) et qui est résistant à la flexion dans le plan radial mais épouse la courbure de la jante (1) entre les deux séries précitées de rayons (4), caractérisée en ce que l'élément de forme allongée est plat et en ce que au moins quatre éléments de fixation (6, 12, 13, 14, 15) sont disposés à des emplacements séparés sur la circonférence de la roue pour fixer l'élément (7) de forme allongée aux rayons (4) de support ou à la jante (1).

2. Roue réflectrice à rayons selon la revendication 1, dans laqelle se trouve un seul desdits éléments allongés (7) se présentant sous la forme d'une bande plate courbée dans le plan radial de la roue (1) et fixé de manière à se trouver radialement à l'intérieur du cercle des embouts (3) de rayons.

3. Roue réflectrice à rayons selon la revendication 1 ou 2, dans laquelle se trouvent six, sept ou huit desdits supports (6).

4. Roue réflectrice à rayons selon l'une quelconque des revendications 1 à 3, dans laquelle les supports (6) comprennent une rainure (10) ainsi qu'une saillie élastique en forme de barbule (11) pour chaque rainure (10) dans le but de retenir le ou les élément(s) (7) dans cette rainure.

5. Roue réflectrice à rayons selon l'une quelconque des revendications 1 à 4, dans laquelle chaque support (6) comporte une tige munie d'une tête (8) à son extrémité radialement extérieure et une saillie élastique en forme de barbule (9) espacée de la tête (8), le support (6) étant fixé à la jante par insertion de la tige à travers un trou orienté radialement dans la jante de manière que la tête (8) et la saillie analogue à une barbule (9) se trouvent, respectivement, sur les côtés radialement opposés de la jante.

6. Roue réflectrice à rayons selon l'une quelconque des revendications 1 à 4, dans laquelle les éléments (7) sont fixés aux rayons (4) de la roue (1) de manière à se trouver à une distance de 5 à 8 cm, de préférence 7,5 cm, de la jante.

7. Roue réflectrice à rayons selon la revendication 6, dans laquelle se trouvent une pluralité d'éléments (7) qui se présentent sous la forme de segments de cercle et qui sont fixés aux rayons (4) à l'aide de moyens de fixation, par exemple de vis ou boulons (13, 15), qui traversent des trous ménagés dans lesdites extrémités des éléments (7).

8. Dispositif réflecteur convenant pour être utilisé avec la roue réflectrice à rayons selon l'une quelconque des revendications 1 à 7.

Fig. 1

Fig. 2

fig. 3

fig. 4

fig. 5